# EUROPEAN PATENT APPLICATION

(11) **EP 3 771 486 A1**
(43) Date of publication of application: **03.02.2021**
(21) Application number: 19189474.0
(22) Date of filing: 31.07.2019
(51) Int. Cl.: B01D 63/02, B01D 53/28, B60H 1/00, H01M 8/04119

(54) **MEMBRANE MODULE FOR GAS HUMIDIFICATION**

(71) Applicant: 3M Innovative Properties Company, Saint Paul, MN 55133-3427 (US)
(72) Inventor: König, Martin, 40225 Duesseldorf (DE); Muehlinghaus, Christian, 58332 Schwelm (DE)
(74) Representative: Hettstedt, Stephan

(57) **Abstract**

In one aspect, the present disclosure provides a fluid contactor (1) comprising
a. a frame (2) comprising a first side (3) and a second side (4) at a distance opposite the first side (3);
b. at least one microporous hollow fiber membrane (5) having a first end (6) and a second end (7), wherein the first end (6) of the at least one microporous hollow fiber membrane (5) is located in the first side (3) of the frame (2) and the second end (7) of the at least one microporous hollow fiber membrane is located in the second side (4) of the frame (2); wherein the first and second ends (6, 7) of the at least one microporous hollow fiber membrane (5) are fixed in the first and second sides (3, 4) of the frame (2) with at least one potting (8) of the first and second ends (6, 7) of the at least one microporous hollow fiber membrane (5);
c. an at least one first fluid support pipe (9) located in the first side (3) of the frame (2) and being in fluid connection with the first end (6) of the at least one microporous hollow fiber membrane (5), and an at least one second fluid support pipe (10) located in the second side (4) of the frame (2) and being in fluid connection with the second end (7) of the at least one microporous hollow fiber membrane (5),
wherein
the frame (2) and the potting (8) are made of the same material.

## Description

### Technical Field

The present disclosure relates to a fluid contactor with integrated microporous hollow fiber membranes. The present disclosure also relates to a method of humification of a fluid such as air.

### Background of the disclosure

The ambient air, especially in rooms with an air-conditioned atmosphere, is often too dry. So, the human beings in these rooms are having oftentimes problems with their skins or their mucous membranes. The reason for that is that low air moisture in such air-conditioned rooms is often too low. To counter such a problem, it is common to increase the air moisture in the ambient air. In smaller rooms it is possible to increase the air moisture by using open vessels filled with water or the use of additional air humidifiers, but this is cumbersome and often unreliable. In bigger buildings having central air-condition units it is often not possible to make use of such relatively simple solutions. The standard for bigger air-condition units is the use of spray lances. These spray lances are distributing a fine fog of fluid, often water, into the conditioned air in the air-condition unit before the air is blowing out of the air-condition unit. The problem of this solution is that the airducts of the air-condition unit get dirty. A regular inspection and cleaning become absolutely necessary, because contamination with bacteria could generate bigger health issues of inhabitants of the buildings or employees working there. It is known that this could be at worst a contamination with e.g. legionella. Accordingly, there is the issue and risk of contamination leading to a possible hazard for the human beings in this air-conditioned rooms. Moreover, the cost for inspection of the air-condition unites and the related interruption of the climatization of the rooms or the building because the air-condition unit needs to be shut down for the time period of the inspection and the cleaning. The use of such air-condition units is also well known in other applications, for example in animal stables, production halls or other buildings. The risk of a problematic contamination by bacterium (e.g. legionella) is particularly high when warm air is distributed from the air conditioning (e.g. in autumn or winter). This is because legionella bacteria have their best propagation between 30°C and 45°C and often the temperature of the air blown into rooms from the air conditioning is in this temperature range. Similar problems are also well-known in vehicles like aircrafts or trains. The ambient air in vehicles tends to have a low humidity, which is not only raising the above concerns, but may also give rise to complaints from passengers feeling uncomfortable.

### Summary

The present disclosure provides a fluid contactor comprising a frame with a first side and a second side at a distance opposite the first side; at least one microporous hollow fiber membrane having a first end and a second end, wherein the first end of the at least one microporous hollow fiber membrane is located in the first side of the frame and the second end of the at least one microporous hollow fiber membrane is located in the second side of the frame; wherein the first and second ends of the at least one microporous hollow fiber membrane are fixed in the first and second sides of the frame with at least one potting of the first and second ends of the at least one microporous hollow fiber membrane; an at least one first fluid support pipe located in the first side of the frame and being in fluid connection with the first end of the at least one microporous hollow fiber membrane, and an at least one second fluid support pipe located in the second side of the frame and being in fluid connection with the second end of the at least one microporous hollow fiber membrane, wherein the frame and the potting are made of the same material.

The present disclosure also provides a device comprising at least one integrated fluid contactor according to the present disclosure.

Furthermore, the present disclosure provides a method for transferring a first fluid into a second fluid, the method comprising the following steps: providing a fluid contactor according to the present disclosure, passing a first fluid through the fluid contactor according to the present disclosure, passing a second fluid passing through the fluid contactor according to the present disclosure and around the outer surface of the at least one microporous hollow fiber membrane of device according to the present disclosure; wherein the first fluid is selected from oil, water, perfume, pheromone, flavor, disinfectant or any combinations thereof before the first fluid emerges from the inside the at least one microporous hollow fiber membrane through the microporous into the second fluid.

The present disclosure provides a method of manufacturing a fluid contactor as described herein comprising the following steps: providing at least one microporous hollow fiber membrane; forming a frame by potting the microporous hollow fiber membrane into a material, preferably a polymer, wherein forming the frame and potting of the ends of the at least one microporous hollow fiber membrane (5) is done by injection molding, pressing, casting, milling, cutting or any combination thereof; insertion of at least one support pipe into the frame; and opening of the closed ends of the microporous hollow fiber membranes by insertion of a support pipe.

The present disclosure provides a use of the fluid contactors according to the present disclosure or of the device as described herein for humidification air, flavoring air or a combination of both.

### Detailed Description

Before any embodiments of this disclosure are explained in detail, it is to be understood that the disclosure is not limited in its application to the details of construction and the arrangement of components set fourth in the following description. The invention is capable of other embodiments and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e. g., 1 to 10 includes 1.4, 1.9, 2.33, 5.75, 9.98, etc.). Also herein, recitation of "at least one" includes all numbers of one and greater (e. g., at least 2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items.

Unless explicitly stated otherwise, all embodiments and optional features of the present disclosure can be combined freely.

The present disclosure provides a fluid contactor comprising:
(i) a frame comprising a first side and a second side at a distance opposite the first side;
(ii) at least one microporous hollow fiber membrane having a first end and a second end, wherein the first end of the at least one microporous hollow fiber membrane is located in the first side of the frame and the second end of the at least one microporous hollow fiber membrane is located in the second side (4) of the frame (2); wherein the first and second ends (6, 7) of the at least one microporous hollow fiber membrane (5) are fixed in the first and second sides (3, 4) of the frame (2) with at least one potting (8) of the first and second ends (6, 7) of the at least one microporous hollow fiber membrane (5);
(iii) an at least one first fluid support pipe (9) located in the first side (3) of the frame (2) and being in fluid connection with the first end (6) of the at least one microporous hollow fiber membrane (5), and an at least one second fluid support pipe (10) located in the second side (4) of the frame (2) and being in fluid connection with the second end (7) of the at least one microporous hollow fiber membrane (5),
wherein the frame (2) and the potting (8) are made of the same material.

This allows to humidify the air in a room without a risk of increasing the content of pathogenic bacteria in ambient air. In addition, the number of different materials used for the production of such devices is reduced. This reduction of raw materials makes recycling easier after reaching the end of the lifetime of the fluid contactor.

It is preferred that material of the frame and the potting of the fluid contactor are selected from at least one polymer, at least one metal, at least one wooden material and/or at least one ceramic material. This ensures a perfect material selection adapted to the individual case of use. For example, a metal having a higher E modulus is necessary in comparison with another materials or a polymer if a good formable material is needed.

Preferably, the material of the frame and the potting of the fluid contactor are selected from at least one polymer selected from epoxy resins, polyurethanes, PP, PE, PA, PPS, ABS, PC, biodegradable plastic and any combinations and mixtures thereof, preferably polyurethanes, epoxy resins. An optimal material selection assures very good technical properties of the fluid contactor. For example, the right polymer for the intended application of the contactor may be a biodegradable polymer. Thisrepresents a good option in terms of sustainability, because the frame and the potting make up a considerable proportion of the total material needed for the fluid contactor. The application area and the environment (e.g. ambient temperature) of the fluid contactor are also very important factors for the selection of the right material.

Preferably, the material of the frame and the potting of the fluid contactor comprise at least one fabric, at least one nonwoven material, at least one cloth and any combinations and mixtures thereof, preferably a fabric made of glass fibers or carbon fibers or any combination and mixtures thereof. These materials may act as a reinforcement. This has the effect of increasing the stability of the contactor by enhancement of the bending stiffness of the material. It may also increase robustness, for example against abrasive particles in the ambient air, of the frame and the potting.

Preferably, the material of the frame and the potting of the fluid contactor comprises at least one organic filler, at least one inorganic filler and any combinations and mixtures thereof. This filling material may increase the E modulus. Therefore, a higher stability of the fluid contactor may be achieved.

Preferably, the material of frame and the potting of the fluid contactor comprises at least one filler selected from wood flour, cellulose, hemp, talcum, glass fiber, slaked lime, hollow glass microsphere, silica and any combinations and mixtures thereof. With the right selection of the filling materials in combination with the basic material, for example one polymer, it is possible to increase the E modulus for a higher stability while the same time reducing the density of the material of the frame and the potting. This has the effect that a very low total weight of the fluid contactor may be achieved, which is in general desirable, but becomes most interesting in applications where saving weight is paramount. This is the case in automotive and in particular in aerospace applications.

Preferably, the material of the frame and the potting of the fluid contactor comprises at least one coloring material. With a coloring of the frame and the potting it is possible to adapt the color of the frame to the environment of the fluid contactor.

Preferably, the coloring material of the frame and the potting of the fluid contactor is selected from carbon black, pigment, titanium oxide and any combinations and mixtures thereof. With a coloring of the frame and the potting it is possible to adapt the color of the frame to the environment of the fluid contactor. For instance, in a disco or another room with the dark ceiling it is preferred to have a fluid contactor with a black frame and potting. The advantage is that such black fluid contactor does not stand from the background. On the other hand, it may be desirable to make the fluid contactor visible, i.e. distinct from the surroundings. This may be desirable for technical service or even emergencies. With different colors it is also possible to define a service interval, for example a fluid contactor with a yellow frame and potting has to change this year and a red one next year. Also possible is to define different types of fluid contactors by different colors of the frames. For instance, a fluid contactor for water as first fluid has a different color as a fluid contactor for perfume as first fluid. With different colors of the frame of the fluid contactor it is possible to define the direction of installation.

Preferably, the fluid contactor has a first side and a second side which are arranged parallel to each other. With two parallel sides the fluid contactor may have a rectangular shape which fits well into common ventilation or air conditioning systems.

Preferably, the fluid contactor has a third side and a fourth side arranged parallel to each other. With two parallel sides the fluid contactor may have a rectangular shape which fits well into common ventilation or air conditioning systems.

Preferably, the fluid contactor has a first side and the second side are arranged rectangular to the third side and the fourth side. The orientation of the side generates a rectangular or a square shape.

Preferably, the fluid contactor has a shape of a triangle, an oval shape, a trapeze shape or different other shapes. With these different shapes it is possible to make quite a lot of different kinds of fluid contactors for a lot of different applications.

It is preferred that the fluid contactor (1) has a distance between the outer contour of the first side and the outer contour of the second side (4) of 2,500 mm or less, preferably 1,800 mm or less or more preferably 1,500 mm or less. It is preferred that the fluid contactor has a distance between the outer contour of the third side and the outer contour of the fourth side (12) of 2,500 mm or less, preferably 1,800 mm or less or more preferably 1,500 mm or less.

It is preferred that the fluid contactor has a distance between the outer contour of the first side and the outer contour of the second side (4) of at least 10 mm, preferably at least 30 mm or more preferably at least 70 mm.

It is preferred that the fluid contactor has a distance between the outer contour of the third side and the outer contour of the fourth side of at least 10 mm, preferably at least 30 mm or more preferably at least 70 mm.

It is preferred that the fluid contactor has a distance between the outer contour of the first side and the distance of the second side is in the range from 10 mm and 2,500 mm, preferably from 30 mm and 1,800 mm or more preferably from 70 mm and 1,500 mm.

It is preferred that the fluid contactor has a distance between the outer contour of the third side and the distance of the fourth side is in the range from 10 mm and 2,500 mm, preferably from 30 mm and 1,800 mm or more preferably from 70 mm and 1,500 mm.

Fluid contactors are useful for a wide range of applications. If the fluid contactors are available in a great number of different of sizes, a lot of different applications become accessible. The larger dimensions listed here are typically more for use in ventilation systems in buildings and the smaller dimensions for uses in vehicles such as cars.

Preferably the shape of the fluid contactor is not a rectangle. The shape of the external form of the fluid contactor can have the shape of a circle, an ellipse, a triangle, an arbitrary formed polygon or any different shapes.

It is preferred that the projected surface of the fluid contactor has an area of 6,250,000 mm² or less, preferably 3,240,000 mm² or less or more preferably 2,250,000 mm² or less. It is also preferred that the projected surface of the fluid contactor has an area of at least 100 mm², preferably 900 mm² or more preferably at least 4,900 mm². It is further preferred that the projected surface of the fluid contactor has an area in the range from 100 mm² and 6,250,000 mm², preferably from 900 mm² and 3,240,000 mm² or more preferably from 4,900 mm² and 2,250,000 mm².

With special designs of fluid contactors, it is possible to adapt the fluid contactor to specific applications.

It is preferred that the projected surface of the fluid contactor has an area of 6,250,000 mm² or less, preferably 3,240,000 mm² or less or more preferably 2,250,000 mm² or less. It is also preferred that projected surface of the fluid contactor has an area of at least 100 mm², preferably 900 mm² or more preferably at least 4,900 mm². It is preferred that projected surface of the fluid contactor has an area in the range from 100 mm² and 6,250,000 mm², preferably from 900 mm² and 3,240,000 mm² or more preferably from 4,900 mm² and 2,250,000 mm².

Preferably, the fluid contactor comprises at least two microporous hollow fiber membranes. A higher amount of microporous hollow fiber membranes increases the performance of the fluid contactor.

Preferably, the first and second ends of the at least two microporous hollow fiber membranes are patterned symmetrically, unevenly or randomly in the frame of the fluid contactor. This orientation of the ends of the microporous hollow fiber membranes in the frame enables a better use of the available space. The possible result is a better performance of the fluid contactor compared with a conventional fluid contactor having the same size.

Preferably, a cross section of the frame or at least a part of the frame has the shape of a triangle, square, ellipse or rectangle. Different shapes allow an optimal adaption of the frame into the location of use. E. g. an ellipse shape allows a better sealing in a housing, the raised part of the frame has a better surface pressure and with that a better sealing in the housing.

Preferably, the fluid contactor comprises at least one connection element located in an opening of the support pipe in the frame. Thisallows a connection between at least one support pipe inside the frame and at least one outside support element, for example a tube, pipe or a hose, to allow a transportation of a medium into the support pipe. With connection elements it is possible to pump a fluid through the fluid contactor. Normally the fluid will circulate in a fluid closed loop, the fluid flows from the exterior tube through the connecting element, through the first support pipe, through the at least one microporous hollow fiber membranes, through the second support pipe, through the connecting element and exhausts the fluid contactor through the exterior tube or a similar element to generate the transport of the fluid.

It is preferred that the fluid contactor comprises microporous hollow fiber membranes with an outer diameter of at least 0.01 mm, preferably of at least 0.1 mm, more preferably of at least 0.15 mm. It is preferred that the fluid contactor comprises microporous hollow fiber membranes with an outer diameter of 3 mm or less, preferably of 2 mm or less, more preferably of 1.5 mm or less.

It is preferred that the fluid contactor comprises microporous hollow fiber membranes with an outer diameter in the range of from 0.01 mm and 3 mm, preferably from 0.10 mm and 2 mm, more preferably from 0.15 and 1.5mm.

The range of diameter of the microporous hollow fiber membranes allows a very broad of use for different applications of these fluid contactors. It is allowing a use of different fluids, with different properties like higher or lower viscosity, and for the use in different environments.

Preferably, the fluid contactor comprises the least one microporous hollow fiber membrane with a length in the range of from 15 mm and 1,990 mm. The length of the microporous hollow fiber membrane is a slightly shorter than the overall dimensions of the fluid contactor because the ends of the microporous hollow fiber membranes are fixed by the potting into the frame.

It is preferred that the fluid contactor comprises a total number of the microporous hollow fiber membranes of at least 20 pieces, preferably of at least 150 pieces and more preferably of at least 1,000 pieces.

It is preferred that the fluid contactor comprises a total number of the microporous hollow fiber membranes of 500,000 pieces or less, preferably of 250,000 pieces or less and more preferably of 200,000 pieces or less.

It is preferred that the fluid contactor comprises a total number of the microporous hollow fiber membranes in a range of from 20 and 500,000 pieces, preferably in a range of from 150 and 250,000 pieces and more preferably in a range of from 1,000 and 200,000 pieces. In principle it is possible to produce and to use fluid contactors with a lower amount of microporous hollow fiber membranes, but the efficiency in terms of the size of the fluid contactor increases with a higher amount of the microporous hollow fiber membranes. The microporous hollow fiber membranes can be also used as a bundle. Such a bundle can comprise a high number of microporous hollow fiber membranes. Another embodiment may be a mat of microporous hollow fiber membranes. Bundling of hollow fiber membranes in a the bundle or a mat can be realized by using a thread or a hairline.

Preferably, the fluid contactor comprises at least one supporting element to prevent a bending of the microporous hollow fiber membrane. The commonly used flexible hollow fiber membrane is not stable enough, especially if the microporous hollow fiber membrane is longer, and needs a supporting element to protect the microporous hollow fiber membrane against damaging by bending. This may lead to damage in that a breakaway of complete microporous hollow fiber membranes or a leak between the potting in the area of the end of the microporous hollow fiber membrane may occur. Such technical failures can happen by force that affects the microporous hollow fiber membrane. For example the force can be created by wind.

Preferably, the fluid contactor comprises at least one supporting element. In this regard, it is preferred that this supporting element is a filter element. Such filter element comprises a folded paper-based material. The flexible microporous hollow fiber membranes are directly attached to this folded material and microporous hollow fiber membranes are supported by this folded material. Additional this integration of a filter element allows a further function, filtration of the through the fluid contactor flowing medium, and a combination of a standard filter element with a fluid contactor.

Preferably the fluid contactor comprises at least one additional bore-hole. This additional bore-hole has a direct connection to one of the support pipes. With this additional bore-hole exists an option to mount a connection element in the end of the additional bore-hole. The end/opening of the support pipe must close by a sealing plug. The sealing plug is may be made of a polymer, for example the material what the frame was made of, but it is not limited to this material. The position of the bore-hole in the frame of the fluid contactor and/or the angle of the hole-bore regarding the frame can be vary and the diameter of the bore-hole can be vary too. The preferred process for integration or for manufacturing the bore-hole can be different (e.g. drilling, cutting, laser cutting).

Preferably, the fluid contactor comprises a supporting element. This supporting element preferably contains a fabric, a net, a lattice, a stake, a pole, a nonwoven material or any combination of the materials before. In order to protect the microporous hollow fiber membranes, the supporting element has to be made of material with the higher flexural strength. An appropriate material is an expanded lattice made of aluminum. The flexible microporous hollow fiber membranes are directly attached to this expanded lattice and with that the microporous hollow fiber membranes are well protected. Instead of an expanded lattice, also a structure made of biodegradable material may be suitable for this function. Such a material may be a structure made of a wood-based product.

The present disclosure also provides a device comprising at least one integrated fluid contactor as described herein. Such an integration of a fluid contactor into a device allows to combine the features of the device with the features of the fluid contactors. In order to be able to apply the feature of the fluid contactor it is necessary to integrated into a device.

Preferably the device is an air conditioner, ventilation system or humidification system. When these devices comprise at least one fluid contactors, it becomes possible to add a new function to these devices. A new function may be an air humification.

Preferably, the device as described herein enables that a first fluid is passed through the at least one first support pipe, a first fluid passed through the inside of at least one microporous hollow fiber membrane and a first fluid passed through the at least one second support pipe or the first fluid passed the support pipes in the reverse direction. This closed system comprising of support pipe and microporous hollow fiber membranes enables a closed system where the first fluid can flow through.

Preferably, the first fluid which is used in the device is selected from oil, water, perfume, pheromone, flavor, disinfectant or any combinations thereof. The aforementioned materials are suitable for use in air humidification devices. For instance, an increase of content of the materials before in the ambient air in a room can have positive effects such that a pleasant odor may have a positive influence to visitors or customers exposed to the ambient air in a sales room or exhibition.

Preferably, the device comprises at least two fluid contactors with at least one support pipe which are formed as through bore-hole. The first opening of the support pipe formed as through bore-hole is for the connection to a supporting apparatus by a hose or a tube. The second opening of the support pipe is directly beside the first opening of a support pipe of a second fluid contactor. A sealing between the ends of the two support pipes of the two fluid contactors can done by a sealing element for example an O-ring. To enable a reliable sealing, it is necessary that the sealing element is pressed between the two frames of the fluid contactors or the sealing element will be fixed by an adhesive or the sealing will be done by a liquid sealant. With this solution, the support pipes are connected in series. A parallel connection of at least two fluid contactors is also possible. With these or any other connections of at least two fluid contactors it is possible equip lager systems with at least two fluid contactors. It is also possible to use at least two first fluids, for example in one fluid contactor is not the same fluid as in the second fluid contactor. With combinations of at least two fluid contactors it is also possible to use at least two second fluids, for example one second fluid is ambient air and the other second fluid is a gas which must be added in the ambient air.

Preferably, the device comprises at least two fluid contactors with at least one support pipe which are formed as through bore-hole. The first opening of the support pipe formed as through bore-hole is for the connection to a supporting apparatus by a hose or a tube. The second opening of the support pipe formed as a through bore-hole is for the connection to the first support pipe of a second fluid contactor. The connection between the support pipes can be realized by means of a hose or a tube.

The present disclosure also provides a method for transferring a first fluid into a second fluid, the method comprising the following steps:
(i) providing the fluid contactor as described herein;
(ii) passing first fluid through the microporous hollow fiber membranes integrated in the fluid contactor according to the present disclosure;
(iii) passing second fluid around the outer surface of the at least one microporous hollow fiber membrane of the fluid contactor as described herein
and the first fluid emerges from the inside of at least one microporous hollow fiber membrane through the microporous into the second fluid. With this method it is possible to increase the content of the first fluid in the second fluid.

Preferably the second fluid in the method is ambient air. It is often necessary to change the property of ambient air. Especially air-conditioned ambient air is often to dry, this means that the air humidity is low. One problem could be that people will get problems with their mucosal membranes due to the dry ambient air. This problem can be solved by increasing the air humidity by the using the here described method. Accordingly, it is preferred that the first fluid comprises water, preferably is water which may further contain further fluids. These further fluids may or may not be miscible with water. Preferably, the at least one further fluid is dissolved in the water, i.e. the first fluid. It is also preferred that the first fluid is perfume, pheromone, medicament, or any combination or mixtures thereof, or a combination or solution thereof with or in water.

Preferably, the ambient air is inside a building or a vehicle. Ambient air is the air inside a vehicle or a building. Often in vehicles and buildings the ambient air is full conditioned. In this case,it is often necessary to control the humidity and the method as described herein is suitable to solve this problem.

Preferably the method as described herein is used to influence the content of a fluid such as the ambient air, where a building is a house, a flat, an apartment, an office, an animal stable, a warehouse, a sales room, a show room, a museum, an exhibition hall, an event location, a stadium or a hospital. The right content of a fluid, e. g. water, in the ambient air is well known. For instance, in a warehouse the right humidity provides a long shelf live of food (e.g. fruits). The method as described herein also provides a solution for a very different application. In bigger concert halls or discos there is often the problem with unpleasant odors, mostly arising from large number of human beings. With method according to the present disclosure, is it possible to dispense a fluid which can mask the odor. For example the first fluid may be a perfume.

Preferably, the method as described herein is used to influence the content of a fluid such as the ambient airwherein the vehicle is a car, a truck, a coach, a bus, a train, an aircraft, a plane, a helicopter, a submarine, a cruiser, a ship, a boat, a cable car, a tank or a spaceship. A too low humidity in vehicles is a well-known problem in vehicles. Especially in aircrafts the humidity is too low. With the method as described herein, it is possible to increase the humidity to the right level to prevent health problems for the passengers and the crew.

Preferably, the method of using the fluid contactor according to the present disclosure comprises a control of the fluid contactor or of the device comprising at least one fluid contactor as described herein. The control can be done manually, automatized or a combination of both. The control preferably comprises sensors for temperature, humidity and/or ambient pressure. The control may preferably regulate the pressure, the volume flow of the fluids inside the device described herein by valves, flaps, rotation speed of pumps and vans. This allows to operate the device always in the desired range.

The present disclosure also provides a method of manufacturing a fluid contactor comprising the following steps:
(i) providing at least one microporous hollow fiber membrane;
(ii) forming a frame by potting the microporous hollow fiber membrane into a material, preferably a polymer, wherein the frame and the potting of the ends of the at least on microporous hollow fiber membrane (5) is done by injection molding, pressing, casting, milling, cutting or any combination of production technologies before;
(iii) inserting at least one support pipe into the frame; and
(iv) opening of the closed ends of the microporous hollow fiber membranes by insertion of the support pipe.

With this method of manufacturing the fluid contactor it is possible to produce a broad range of different types of fluid contactors. These manufacturing technologies are allowing a wide variety of different designs and versions of the fluid contactors, specialized on different applications at low cost for the production.

Preferably, the inserting the support pipes into the frame may be carried out by drilling, milling, cutting, cutting by water, cutting by laser, any different technologies to insert the pipes into the frame and to open the ends of the at least one microporous hollow fiber membrane. A material-friendly manufacturing method is necessary to bring in the pipes into the frame and to open the ends of the microporous hollow fiber membranes. It is important that the material of the frame/potting and of the hollow fiber membranes will be not damaged by burning or overheating.

The present disclosure also provides a use of the fluid contactor as described herein for humidification or flavoring of ambient air or a combination of both.

The disclosure will now be described, by way of example only, with reference to the following drawings, in which:
Figure 1 is a side view of a fluid contactor
Figure 2 is a detailed view of the fluid contactor
Figure 3 is a detailed view of the fluid contactor
Figure 4 is a sectional drawing of the frame of a fluid contactor
Figure 5 is a sectional drawing of the fluid contactor with an adapted hose
Figure 6 is a side view of a fluid contactor where a supporting element is integrated
Figure 7 is a detailed view of the connection of two fluid contactors
Figure 8 is a detailed view of the fluid contactor

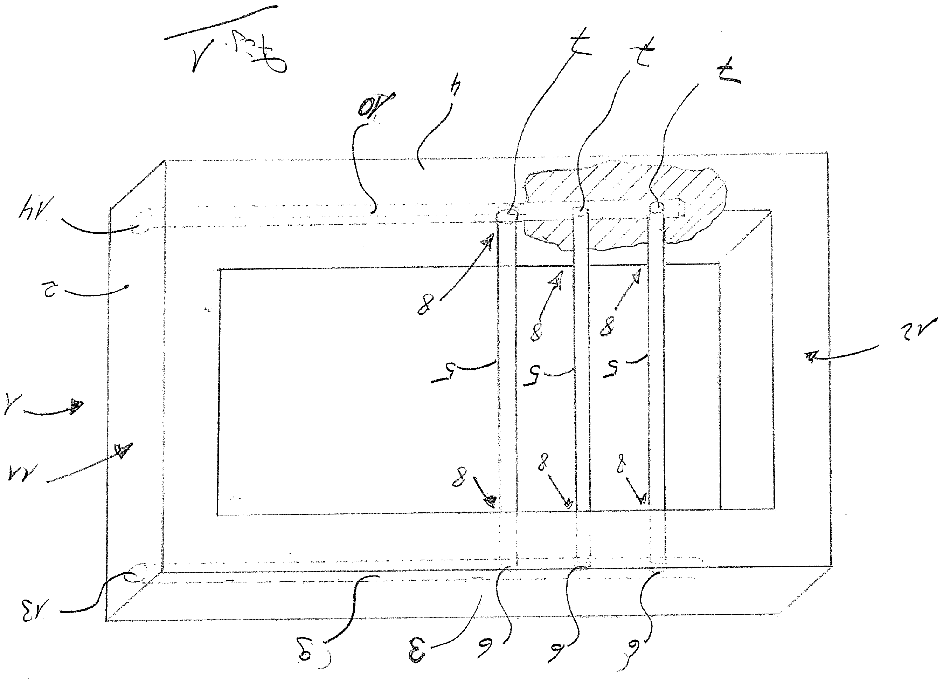

Figure 1 illustrates a fluid contactor (1). The fluid contactor (1) comprises a frame (2). The frame (2) of the fluid contactor (1) comprises four different sides (3 + 4 + 11 + 12), each two sides, the first side (3) and the second side (4) are parallel to each other and the third side (11) is also parallel to the fourth side (12). The third side (11) and the fourth side (12) are rectangular to the first side (3) and second side (4). The fluid contactor (1) comprises microporous hollow fiber membranes (5). Only 3 microporous hollow fiber membranes (5) are shown as an example, normally a fluid contactor comprises more microporous hollow fiber membranes (5). The first end (6) of the microporous hollow fiber membranes (5) is fixed in the first side of the frame (3) and the second end (7) of the microporous hollow fiber membranes (5) is in the second side of the frame (4). The fixing of the two ends (6 + 7) of the microporous fiber membranes is done by a potting (8). Each ends of all microporous hollow fiber membranes (5) are fixed in the sides of the frame by a potting (8). Further there are support pipes (9 + 10) in the frame (2). The all microporous hollow fiber membranes (5) are having a connection to these support pipes (9 + 10). In this figure comprises two support pipes (9 + 10), a different amount of supporting channels is possible. The openings (13 + 14) of the support pipes (9 + 10) are allowing a connection of on outside of the fluid contactor (1) installed supplying apparatus (not shown in the figure). This apparatus can be connected to the fluid contactor (1) by means of hoses or pipes (not shown in the figure).

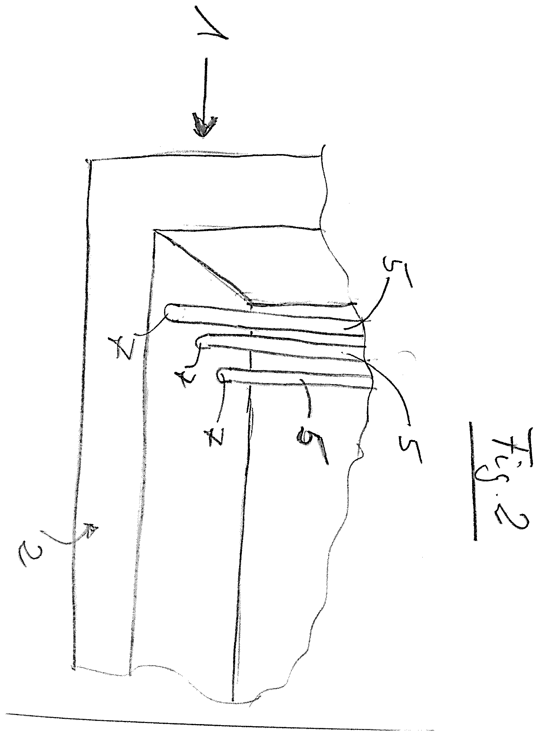

Figure 2 illustrates a detailed view of the fluid contactor (1). The orientation of microporous hollow fiber membranes (5), in particular of the ends (7) of the microporous hollow fiber membranes in the frame (2), is one behind the other. To keep the figure clear, only 3 microporous hollow fiber membranes (5) are shown as an example, normally a fluid contactor (1) comprises more microporous hollow fiber membranes (5).

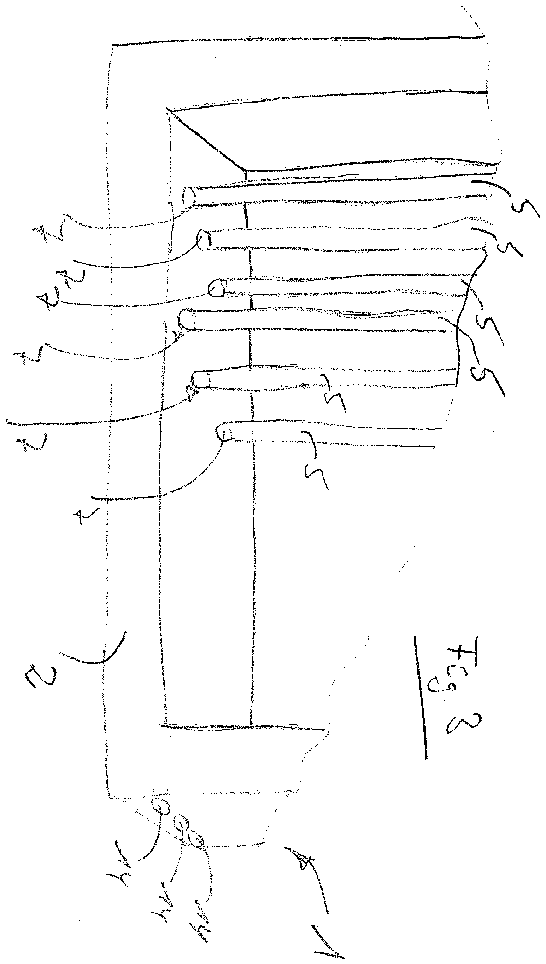

Figure 3 illustrates a detailed view of the fluid contactor (1). The orientation of microporous hollow fiber membranes (5) and with that the ends (7) of the microporous hollow fiber membranes in the frame (2) is more randomly. To keep the figure clear only 6 microporous hollow fiber membranes (5) are shown as an example, normally a fluid contactor (1) comprises more microporous hollow fiber membranes (5). The 3 support pipes (14) are connected with the microporous hollow fiber membranes (5). The first fluid (not shown in the figure) can flown through the support pipes to the microporous hollow fiber membranes (5).

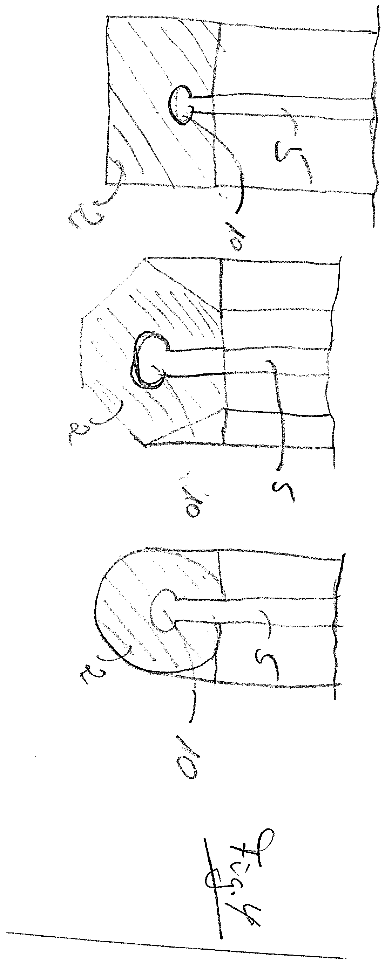

Figure 4 illustrates a detailed view of cross sections of the fluid contactor (1). The cross sections are showing different shapes of the frame (2) of the fluid contactor (1). Each embodiment is showing a support pipe (10) and a microporous hollow fiber membrane (5).

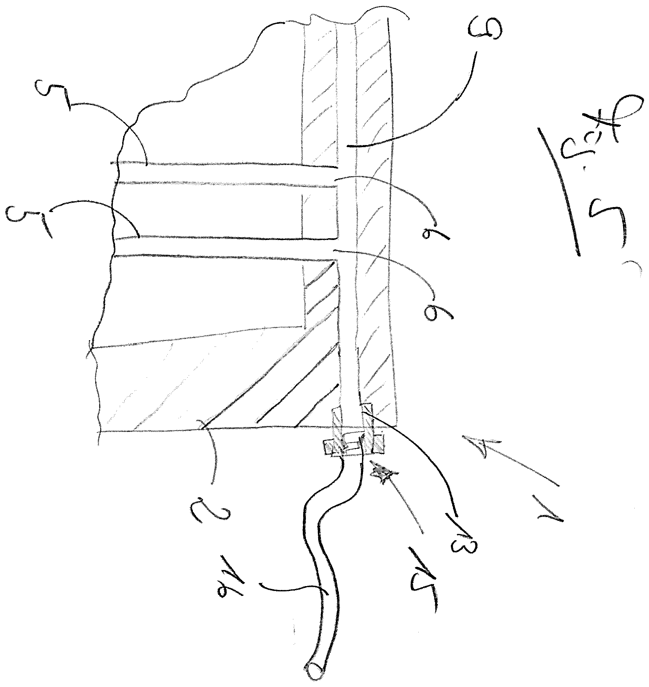

Figure 5 illustrates a detailed view of a cross section of the fluid contactor (1). The cross section is showing the frame (2) of the fluid contactor (1), the support pipe (9) and the microporous hollow fiber membranes (5). The connection element (15) is fixed in the opening (13) of the support pipe (9). A hose (16) is fixed in the connection element (15).

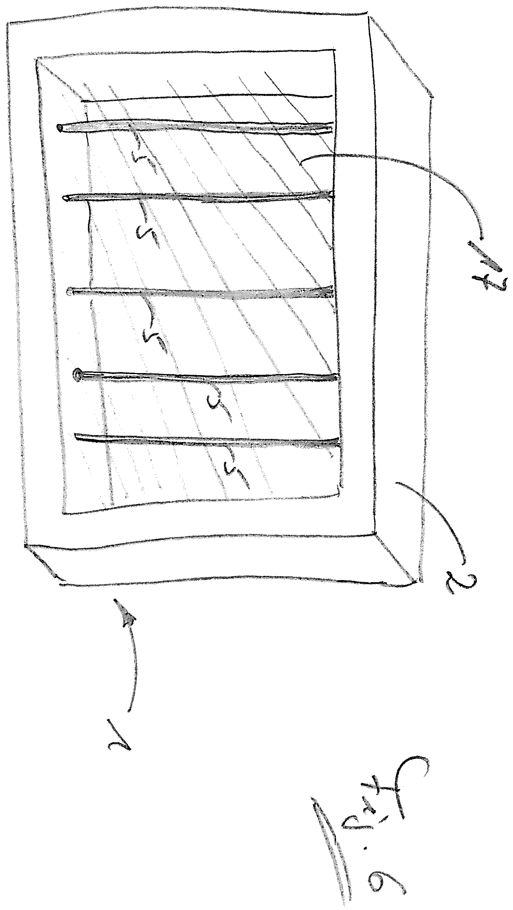

Figure 6 illustrates a fluid contactor (1). The fluid contactor comprises additionally a supporting element (17) to prevent a bending of the microporous hollow fiber membranes (5). The supporting element is fixed at the frame (2) of the fluid contactor (1).

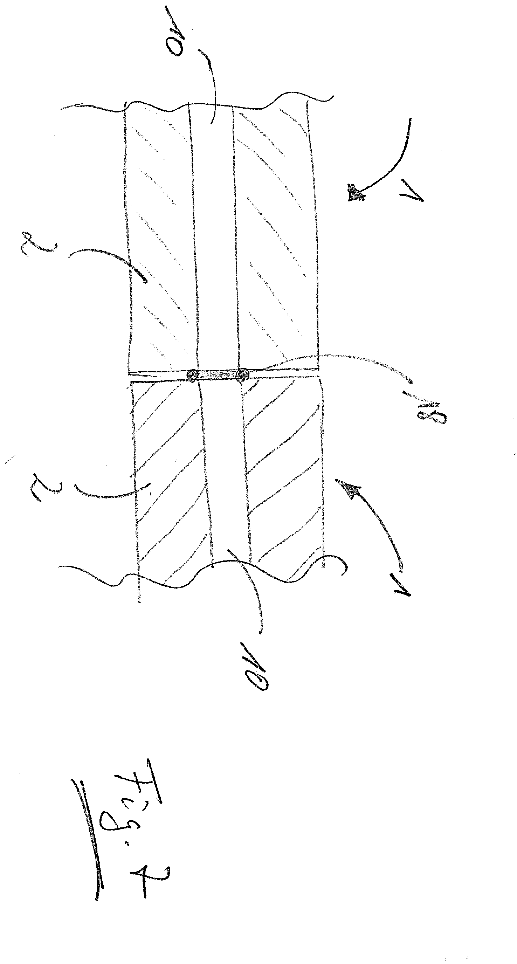

Figure 7 illustrates a detailed view of cross sections of two fluid contactors (1). Between the frames (2) and the opening of the support pipes (9 or 10) a sealing element (18) is installed. This sealing element (18) allows a flow of the first fluid (not shown in the figure) through the support pipe of one fluid contactor (1) to the second fluid contactor (1).

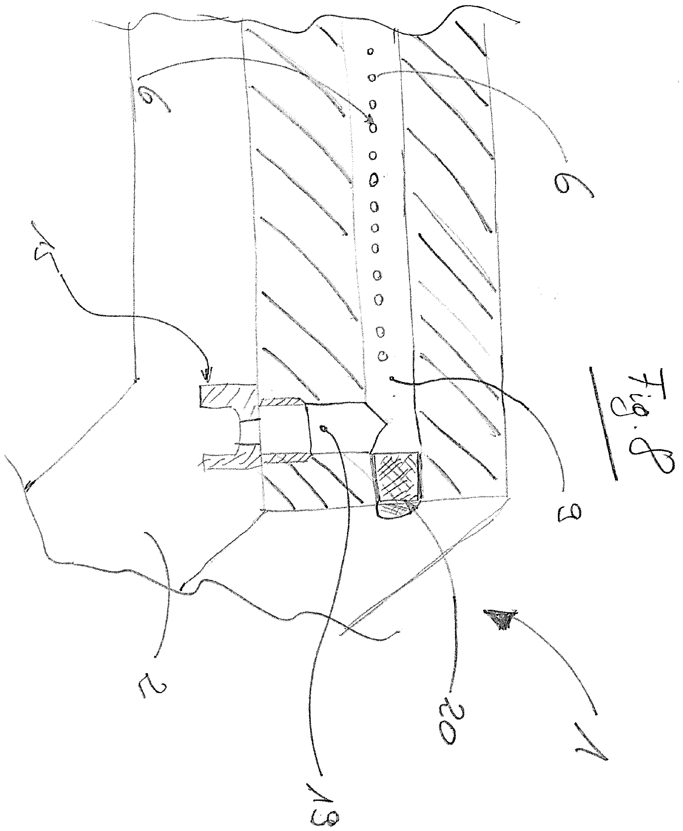

Figure 8 illustrated a detailed view of the cross section of a fluid contactor (1). In the frame (2) of the fluid contatcor (1) is the support pipe (9) and the opened ends (6) of the microporous hollow fiber membranes (not shown in the figure). Additionally a bore-hole (19) with a support element (15) is in the frame (2). The opening of the support pipe (9) is closed by a sealing plug (20).

## Claims

1. A fluid contactor (1) comprising
a. a frame (2) comprising a first side (3) and a second side (4) at a distance opposite the first side (3);
b. at least one microporous hollow fiber membrane (5) having a first end (6) and a second end (7), wherein the first end (6) of the at least one microporous hollow fiber membrane (5) is located in the first side (3) of the frame (2) and the second end (7) of the at least one microporous hollow fiber membrane is located in the second side (4) of the frame (2); wherein the first and second ends (6, 7) of the at least one microporous hollow fiber membrane (5) are fixed in the first and second sides (3, 4) of the frame (2) with at least one potting (8) of the first and second ends (6, 7) of the at least one microporous hollow fiber membrane (5);
c. an at least one first fluid support pipe (9) located in the first side (3) of the frame (2) and being in fluid connection with the first end (6) of the at least one microporous hollow fiber membrane (5), and an at least one second fluid support pipe (10) located in the second side (4) of the frame (2) and being in fluid connection with the second end (7) of the at least one microporous hollow fiber membrane (5), wherein
the frame (2) and the potting (8) are made of the same material.

2. The fluid contactor (1) according to claim 1, wherein the material of the frame (2) and the potting (8) is selected from at least one polymer, at least one metal, at least one wooden material, and/or at least one ceramic material.

3. The fluid contactor (1) according to claim 2, wherein the at least one polymer is selected from epoxy resin, polyurethane, PP, PE, PA, PPS, ABS, PC, biodegradable plastic and any combinations and mixtures thereof, preferably polyurethane and epoxy resin.

4. The fluid contactor (1) according to any one of claims 2 to 3, wherein the material of the frame (2) and the potting (8) comprises at least one organic filler, at least one inorganic filler and any combinations and mixtures thereof.

5. The fluid contactor (1) according to any one of the preceding claims, wherein the material of the frame (2) and the potting (8) comprises at least one coloring material.

6. The fluid contactor (1) according to any one of the preceding claims, wherein the size of the projected surface of the fluid contactor has an area in the range from 100 mm² and 6,250,000 mm², preferably from 900 mm² and 3,240,000 mm² or more preferably from 4,900 mm² and 2,250,000 mm².

7. The fluid contactor (1) according to any one of the preceding claims, wherein at least one connection element (15) is located in the frame (2) and allows a connection between at least one support pipe (9 + 10) inside the frame (2) and at least one outside support element (16), for example a tube, pipe or a hose, to allow a transportation of a medium into the support pipe (9 + 10).

8. The fluid contactor (1) according to any one of the preceding claims, wherein the at least one microporous hollow fiber membrane comprises at least one supporting element (17).

9. The fluid contactor (1) according to claim 8, wherein the supporting element comprises at least one filter element.

10. The fluid contactor (1) according to claim 8 or 9, wherein the supporting element comprises a fabric, a net, a lattice, a stake, a pole, a nonwoven material or any combination of the materials before.

11. A device comprising at least one integrated fluid contactor (1) according to any one of the preceding claims.

12. The device according to claim 11, wherein the device is an air conditioner, ventilation system or humidification system.

13. A method for transferring a first fluid into a second fluid, the method comprising the following steps:
(i) providing a fluid contactor according to any one of claims 1 to 10 or a device according to claim 10 or claim 11,
(ii) passing a first fluid through the fluid contactor,
(ii) passing a second fluid passing through the fluid contactor and around the outer surface of the at least one microporous hollow fiber membrane;
wherein the first fluid selected from oil, water, perfume, pheromone, flavor, disinfectant or any combinations of the materials before emerges from the inside the at least one microporous hollow fiber membrane (5) through the microporous into the second fluid.

14. A method of manufacturing a fluid contactor (1) comprising the following steps:
(i) providing at least one microporous hollow fiber membrane (5);
(ii) forming a frame (2) by potting the microporous hollow fiber membrane (5) into a material, preferably a polymer, the frame and the potting of the ends of the at least on microporous hollow fiber membrane (5) is done by injection molding, pressing, casting, milling, cutting or any combination of production technologies before;
(iii) the insertion of the at least one support pipe into the frame; and
(iv) opening of the closed ends of the microporous hollow fiber membranes by insertion of the support pipe.

15. Use of the fluid contactor according to any one of claims 1 to 10 or of the device according to claims 11 or 12 for humidification air, flavoring air or a combination of both.
